## Europäisches Patentamt

## European Patent Office

## Office européen des brevets

(19)

(11) Veröffentlichungsnummer: **0 133 320**
**B1**

(12)

# EUROPÄISCHE PATENTSCHRIFT

(45) Veröffentlichungstag der Patentschrift:
**15.07.87**

(51) Int. Cl.⁴: **B 23 F 21/22**

(21) Anmeldenummer: **84109004.6**

(22) Anmeldetag: **18.12.82**

(60) Veröffentlichungsnummer der früheren Anmeldung
nach Art. 76 EPÜ: **0085176**

(54) **Messerkopf für eine Verzahnungsmaschine.**

(30) Priorität: **12.01.82 CH 145/82**

(43) Veröffentlichungstag der Anmeldung:
**20.02.85 Patentblatt 85/8**

(45) Bekanntmachung des Hinweises auf die Patenterteilung:
**15.07.87 Patentblatt 87/29**

(84) Benannte Vertragsstaaten:
**AT CH DE FR GB IT LI SE**

(56) Entgegenhaltungen:
**US - A - 3 268 980**
**US - A - 3 268 981**
**US - A - 3 961 403**

(73) Patentinhaber: **Werkzeugmaschinenfabrik
Oerlikon-Bührle AG, Birchstrasse 155, CH-8050 Zürich
(CH)**

(72) Erfinder: **Kotthaus, Erich, Schmittenackerstrasse 18,
CH-8304 Wallisellen (CH)**

**Beschreibung**

Die Erfindung bezieht sich auf einen Messerkopf für eine Verzahnungsmaschine gemäss dem Oberbegriff des Anspruchs 1.

Aus den Patentschriften US-A-3 268 980 und US-A-3 961 403 sind solche Messerköpfe bekannt, wobei allerdings in der erstgenannten Patentschrift die Messer nicht stabförmig ausgebildet und in ihrer Längsrichtung im Messerkopf einstellbar angeordnet sind. Beim Gegenstand beider Patentschriften ergeben sich jedoch Schwierigkeiten, indem durch die Spannkraft der Schrauben in einem Schlitz die Schneide der Messer im angrenzenden Schlitz eine Positionsveränderung erleiden und damit ein exaktes Abrichten der Schneiden aller Messer im Messerkopf erschwert wird. Das beim Anziehen der Schrauben entstehende Drehmoment kann sogar zur unerwünschten Kippung des angrenzenden Schlitz- oder Nutensteges führen und dadurch das Einsetzen eines weiteren Messers im angrenzenden leeren Schlitz verunmöglichen oder mindestens Unwucht erzeugen. In der Patentschrift US-A-3 268 981 ist zur Überwindung dieser Schwierigkeit vorgeschlagen worden, an der Peripherie des Messerkopfes in jeden Nutensteg einen zusätzlichen Schlitz anzubringen. Dies kann aber seinerseits zu unerwünschten Schwingungen beim Schneiden der Zahnräder führen.

Die Erfindung, wie sie in den Ansprüchen gekennzeichnet ist, löst die Aufgabe, einen Messerkopf zu schaffen, bei dem beim Anziehen der Schrauben zur Befestigung der Messer unerwünschte Drehmomente auf die Schlitzstege vermieden werden.

Die durch die Erfindung erreichten Vorteile sind im wesentlichen darin zu sehen, dass die Spannkraft der Schrauben sich nur im Bereich der Nuten auswirkt, ohne dass ein nachteiliges Drehmoment resultiert, weil die beiden angreifenden Spannkräfte bedingt durch die keil- und bogenförmigen Stützflächen einen spitzen Winkel bilden und somit die einzelnen Schlitze eher zusammenziehen bzw. die Schlitzstege nicht auseinanderdrücken.

Im folgenden wird die Erfindung anhand von Zeichnungen, welche einen Ausführungsweg darstellen, näher erläutert. Es zeigen:

Figur 1 einen Teil eines Messerkopfes in Aufsicht;

Figur 2 einen Teil eines Messerkopfes gemäss Figur 1 in Ansicht;

Figur 3 einen Messerkopf im Schnitt.

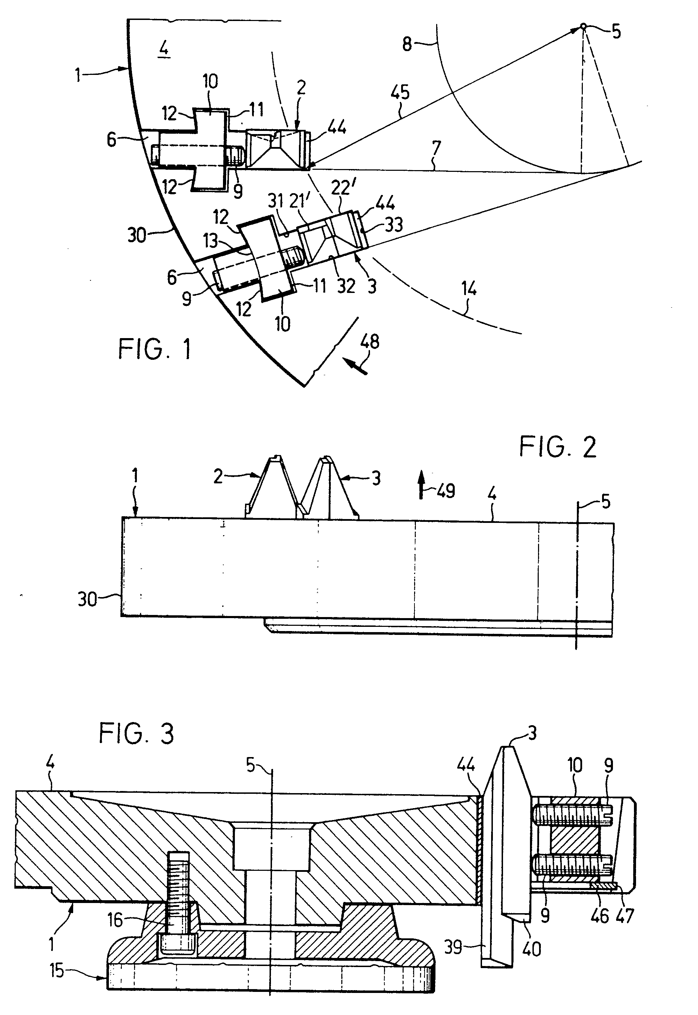

Figur 1 zeigt einen Teil eines Messerkopfes 1 in Aufsicht. Dieser ist in der Regel kreisförmig ausgebildet und trägt einteilige Messer 2 und/oder zweiteilige Messer 3, von denen üblicherweise eine grössere Anzahl, als hier einfachheitshalber gezeigt, gleichmässig entlang des ganzen Umfanges des Messerkopfes angeordnet sind. Diese Messer 2 und 3 treten aus einer Stirnfläche 4 (Fig. 2) hervor. Der Messerkopf 1 ist in nicht näher dargestellter Weise um eine Messerkopfachse 5 in einer Verzahnungsmaschine drehbar gelagert. Die Messer 2 und 3 sind in Schlitzen 6 angeordnet, die gegen eine Umfangsfläche 30 hin offen sind. Ist der Messerkopf 1 zum Schneiden von Zahnrädern nach einem Einzelteilverfahren, bei dem eine Zahnlücke nach der anderen einzeln geschnitten wird, vorgesehen, so sind die Schlitze 6 radial gegen die Messerkopfachse 5 verlaufend angeordnet, wie an sich bekannt ist.

Ist der Messerkopf zum Schneiden von Zahnrädern nach einem kontinuierlichen Verfahren, wobei alle Zahnlücken gleichzeitig hergestellt werden, bestimmt, so verlaufen die Schlitze 6 entlang einer Tangente 7 an einen Kreis 8 um die Messerkopfachse 5. Der Kreis 8 wird auch als kleiner Rollkreis bezeichnet. Auch dies ist bekannt.

In den Schlitzen 6 werden die Messer 2 und 3 durch Seitenflächen 31 und 32 sowie eine Endfläche 33 einerseits und Schrauben 9 andererseits gehalten. Die Schrauben 9 ihrerseits stützen sich auf Riegeln 10 ab, die sich ihrerseits über Stützflächen 12 am Messerkopf 1 gegen die Spannkraft der Schrauben 9 abstützen. Die Stützflächen 12 werden durch Herausarbeiten einer Quernut 11 zum Schlitz 6 gebildet. Die Stützflächen 12 bilden mit den Seitenflächen 31 und 32 keinen rechten Winkel. Die Stützflächen 12 sind leicht pfeilförmig angeordnet, wobei die Pfeilspitze gegen das Messer 2, 3 weist. Es ist auch möglich, die Stützflächen 12 auf einem Bogen 13 anzuordnen. Alle Schlitze 6 eines Messerkopfes 1 sind unter sich gleich und gleicherweise angeordnet, so dass die Messer 2 und 3 auf einem Kreis 14 zu liegen kommen.

Figur 3 zeigt den Messerkopf 1 im Schnitt. Dabei erkennt man ein Messer 3, einen Riegel 10 und Schrauben 9, welche das Messer 3 halten. Ein Befestigungsflansch 15 dient dem Befestigen des Messerkopfes 1 auf einer Spindel. Der Befestigungsflansch 15 ist mittels Schraubverbindungen 16, wovon nur eine dargestellt ist, am Messerkopf 1 befestigt.

Ferner sind Distanzplättchen 44 vorgesehen, die es erlauben, den Abstand 45 der Messer von der Messerkopfachse 5 einzustellen. Die Riegel 10 werden von unten durch einen Ring 46 abgestützt, der in einer Nut 47 angeordnet ist.

Zum Einsetzen der Messer 2 und 3 sowie der weiteren hier nicht näher dargestellten Messer müssen die Schrauben 9 zunächst genügend gelockert sein. Anschliessend wird bei einem Messerkopf gemäss Figur 3 in jedem Schlitz 6 beispielsweise ein Stabmesser 3 eingesetzt, das beispielsweise auch aus zwei Stabmesserhälften 39 und 40 bestehen kann. Gleichzeitig mit dem Stabmesser wird auch bei Bedarf ein Distanzplättchen 44 eingesetzt. So kann der Abstand 45 von der Messerkopfachse 5 genau eingehalten werden. Dann werden die Schrauben 9 angezogen. Dabei bewirken die Reaktionskräfte, dass sich der Riegel 10 in Richtung der Quernut 11 deformiert. Die aus Figur 1 ersichtliche Anordnung der Stützflächen 12 steuert die Deformation des Riegels 10 so, dass sich der Riegel 10 in der Quernut 11 nicht verklemmen kann. Das bedeutet, dass beim späteren Lösen der Schrauben 9 der Riegel 10 nicht in einer verklemmten Stellung verharren kann und somit leicht entfernt werden kann, was die Reinigung des Schlitzes 6 erleichtert. Die genaue Positionierung der Messerschneiden in einer Richtung parallel zur Messerkopfachse 5 geschieht auf eine an sich bereits bekannte, auch bei anderen Messerköpfen angewandte und somit hier nicht näher dargestellte Art und Weise.

## Patentansprüche

1. Messerkopf (1) für eine Verzahnungsmaschine mit in Schlitzen (6) befestigbaren, stabförmigen, aus einer Stirnfläche (4) des Messerkopfes (1) herausragenden und in ihrer Längsrichtung einstellbaren Messern (2, 3), wobei die Schlitze (6) gegen eine Umfangsfläche (30) hin offen sind, eine Quernut (11) mit zwei gegen die Messer (2, 3) gerichteten Stützflächen (12) aufweisen und in die Schlitze Schrauben (9) aufweisende Riegel (10) eingesetzt sind zum Festhalten und Abstützen der Messer (2, 3) über die Stützflächen (12) am Messerkopf (1), dadurch gekennzeichnet, dass die Stützflächen (12) leicht pfeilförmig oder bogenförmig gegen die Messer (2, 3) gerichtet ausgebildet sind.

2. Messerkopf gemäss Anspruch 1, dadurch gekennzeichnet, dass die Schlitze (6) tangential zu einem Kreis (8) um eine Messerkopfachse (5) angeordnet sind zum Herstellen von Zahnrädern nach einem kontinuierlichen Verfahren.

## Claims

1. Cutter head (1) for a gear cutting machine with bar-type cutters (2, 3) being retainable in slots (6) and adjustable in a longitudinal direction and projecting from an end face (4) of the cutter head (1), whereas the slots (6) are open towards a peripheral face (30), each having a transversely extending groove (11) with two supporting faces (12) extending towards the cutters (2, 3) and a cross-bar (10) with screws (9) coacting with the supporting faces (12) to retain and support the cutters (2, 3) in its associated slot in the cutter head (1), characterised in that the supporting face (12) are designed to possess a slight arrow-shaped or arcuated configuration extending towards the cutters (2, 3).

2. Cutter head as claimed in claim 1, wherein the slots (6) extend tangentially with respect to a circle (8) about a cutter head axis (5) for producing gears in a continuous gear cutting process.

## Revendications

1. Tête porte-outils (1) pour une machine à tailler les engrenages, avec des outils en forme de barreau (2, 3), susceptibles d'être fixés dans des encoches (6), et faisant saillie hors d'une face frontale (4) de la tête porte-outils (1) en étant réglables en direction longitudinale, les encoches (6) étant ouvertes vers une surface périphérique (30) et comportant une gorge transversale (11) avec deux surfaces d'appui (12) dirigées vers les outils (2, 3), tandis que dans les encoches sont mis en place des verrous (10) comportant des vis (9) pour maintenir les outils (2, 3) et leur donner un appui par l'intermédiaire des surfaces d'appui (12) sur la tête porte-outils (1), tête porte-outils caractérisée en ce que les surfaces d'appui (12) sont légèrement en flèche ou bien en forme d'arc, en étant dirigées vers les outils (2, 3).

2. Tête porte-outils selon la revendication 1, caractérisée en ce que les encoches (6) sont tangentielles à un cercle (8) autour d'un axe (5) de la tête porte-outils pour la fabrication de roues dentées, selon un procédé en continu.

0133320

FIG. 1

FIG. 2

FIG. 3